# EUROPEAN PATENT APPLICATION

(11) **EP 4 425 656 A1**
(43) Date of publication of application: **04.09.2024**
(21) Application number: 23737487.1
(22) Date of filing: 10.01.2023
(51) Int. Cl.: H01M 50/178, H01M 50/533, H01M 50/557

(54) **SECONDARY BATTERY**

(30) Priority: 10.01.2022 KR 20220003644; 09.01.2023 KR 20230002807
(71) Applicant: LG Energy Solution, Ltd., Seoul 07335 (KR)
(72) Inventor: HWANG, Soon Choel, Daejeon 34122 (KR); LEE, Sung Won, Daejeon 34122 (KR); BAEK, Sang Min, Daejeon 34122 (KR)
(74) Representative: Plasseraud IP
(86) International application number: PCT/KR2023/000450
(87) International publication number: WO 2023/132739

(57) **Abstract**

The present invention relates to a secondary battery, and more particularly, to a secondary battery including an electrode lead electrically connected to an electrode assembly.

The present invention provides a secondary battery including: a pouch in which an electrode assembly is accommodated; and an electrode lead electrically connected to the electrode assembly and protruding outward from the inside of the pouch, wherein, in the electrode lead, at least one of corners disposed inside the pouch has a predetermined curvature radius.

## Description

### TECHNICAL FIELD

The present application claims the benefit of the priority of Korean Patent Application Nos. 10-2022-0003644, filed on January 10, 2022, and 10-2023-0002807, filed on January 09, 2023, which are hereby incorporated by reference in their entirety.

The present invention relates to a secondary battery, and more particularly, to a secondary battery including an electrode lead electrically connected to an electrode assembly accommodated in a pouch.

### BACKGROUND ART

In recent, as technical development and demands for mobile devices are increasing, demands for chargeable and dischargeable secondary batteries as energy sources are rapidly increasing. Thus, many studies on secondary batteries which are capable of meeting various demands have been conducted.

In addition, secondary batteries have attracted considerable attention as power sources for electric vehicles (EVs), hybrid electric vehicles (HEVs), and plug-in hybrid electric vehicles (PHEVs), which have been developed to solve limitations, such as air pollution, caused by existing gasoline and diesel vehicles that use fossil fuels.

In these secondary batteries, many studies have been conducted on lithium secondary batteries having high energy density and discharge voltage, and the lithium secondary batteries have been commercialized to be widely used. Although the lithium secondary batteries have various structures, there is a high demand for a pouch-type secondary battery that typically has a thin thickness, is easy to be stacked and arranged, and is partially changed in its shape.

The pouch-type secondary battery has a structure in which an electrode assembly and an electrolyte are embedded in a pouch-type laminate sheet capable of accommodating the electrode assembly. Such a laminate sheet is also referred to as a 'pouch' in a narrow sense. The pouch may include a metal layer and a resin layer, and the resin layer may be fused by heat.

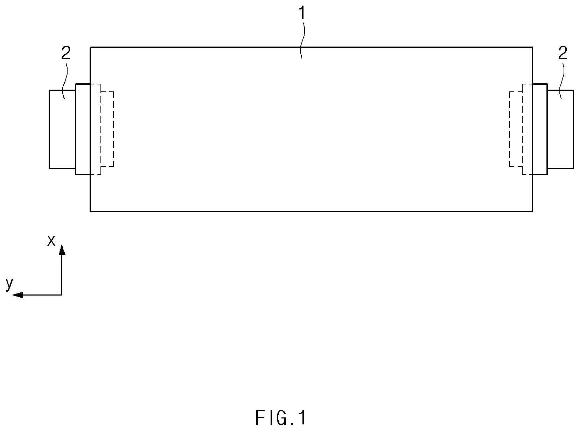

Particularly, the pouch-type secondary battery has a structure in which a pouch surrounds an electrode assembly so that an electrode assembly is not exposed to the outside. Here, as illustrated in FIG. 1, the pouch-type secondary battery has a structure, in which outer circumferences of a pouch 1 are sealed in a state in which electrode leads 2 electrically connected to an electrode assembly (not shown) protrude to the outside of the pouch 1.

When the above-described pouch-type secondary battery constitutes a secondary battery module, the electrode lead 2 described above may be bent to be coupled to a busbar provided for sensing in the secondary battery module.

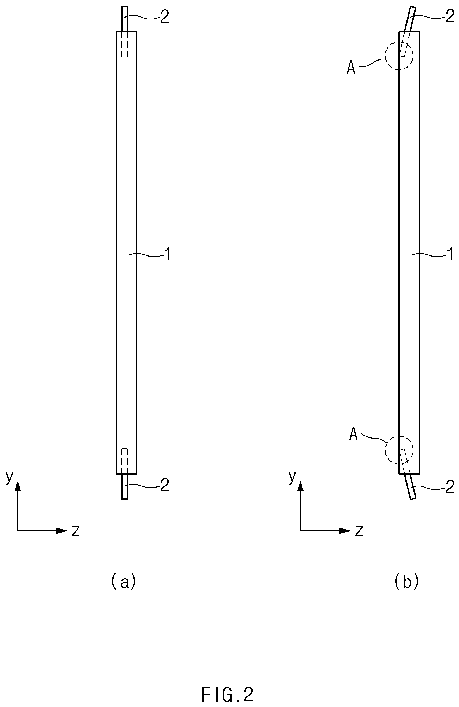

Here, a corner of the electrode lead 2 usually has an angular shape (see FIG. 1), and when the electrode lead 2 is bent (see FIGS. 2a to 2b), there is a problem in that damage such as cracks occurs in an area (see an area A in FIG. 2b) on which the corner of the electrode lead 2 and the pouch 1 are in contact with each other.

In this case, a resin layer of the pouch 1 may be easily damaged, and thus, there is very high possibility that a metal layer inside the pouch 1 and the electrode lead 2 are in contact with each other. As a result, when the contact occurs, the metal layer and the electrode lead 2 may be electrically connected to each other to cause poor insulation resistance. Furthermore, due to an occurrence of corrosion, since moisture may be penetrated into the pouch 1 to cause a serious problem in quality of the secondary battery, a technology for solving this problem is required.

### DISCLOSURE OF THE INVENTION

### TECHNICAL PROBLEM

The present invention has been made to solve the above problems, and an object of the present invention is to provide a secondary battery including an electrode lead that prevents a pouch from being damaged.

### TECHNICAL SOLUTION

The present invention provides a secondary battery including: a pouch in which an electrode assembly is accommodated; and an electrode lead electrically connected to the electrode assembly and protruding outward from the inside of the pouch, wherein, in the electrode lead, at least one of corners disposed inside the pouch has a predetermined curvature radius.

When a width of the corner in a width direction of the electrode lead is Rx, and a width of the electrode lead is W, a conditional expression of 1/50≤Rx/W≤1/20 may be satisfied.

When a width of the corner in a longitudinal direction of the electrode lead is Ry, and a length of the electrode lead is L, a conditional expression of 1/45≤Ry/L≤ 1/20 may be satisfied.

When a width of the corner in a width direction of the electrode lead is Rx, and a curvature radius of the corner is R, a conditional expression of Rx≤R may be satisfied.

When a width of the corner in a longitudinal direction of the electrode lead is Ry, and a curvature radius of the corner is R, a conditional expression of Ry≤R may be satisfied.

When a width of the corner in a width direction of the electrode lead is Rx, and a width of the corner in a longitudinal direction of the electrode lead is Ry, a conditional expression of 1/2≤Rx/Ry≤2 may be satisfied.

When the curvature radius is R, a conditional expression of 2 mm≤R≤5 mm may be satisfied.

When a width of the corner in a width direction of the electrode lead is Rx, a conditional expression of 1 mm≤ Rx≤2 mm may be satisfied.

When a width of the corner in a longitudinal direction of the electrode lead is Ry, a conditional expression of 1 mm≤Ry≤2 mm may be satisfied.

A center of a curvature circle having the curvature radius may be disposed on the electrode lead.

The secondary battery may further include a plurality of electrode tabs protruding from an electrode of the electrode assembly and coupled to the electrode lead through welding.

### ADVANTAGEOUS EFFECTS

The present invention may provide the secondary battery including the electrode lead, in which at least one of corners disposed inside the pouch has the predetermined curvature radius to prevent the pouch from being damaged, thereby improving the poor insulation resistance and improving the durability of the secondary battery, battery.

### BRIEF DESCRIPTION OF THE DRAWINGS

FIG. 1 is a front view illustrating a secondary battery having a shape of an electrode lead according to a related art.
FIG. 2a is a side view illustrating the secondary battery of FIG. 1 before the electrode lead is bent.
FIG. 2b is a side view illustrating the secondary battery of FIG. 1 after the electrode lead is bent.
FIG. 3 is a front view illustrating a secondary battery having a shape of an electrode lead according to Embodiment 1 of the present invention.
FIG. 4 is an enlarged front view illustrating the electrode lead of the secondary battery of FIG. 3.
FIG. 5 is a side view illustrating a state in which an electrode lead is tested.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention provides a secondary battery 10 including: a pouch 11 in which an electrode assembly (not shown) is accommodated; and an electrode lead 12 electrically connected to the electrode assembly and protruding outward from the inside the pouch 11, and in the electrode lead 12, at least one of corners disposed inside the pouch 11 has a predetermined curvature radius.

First, the pouch 11 is a configuration in which the electrode assembly is accommodated, and various configurations are possible.

Specifically, the pouch 11 may accommodate the electrode assembly, and a peripheral area in which the electrode assembly is accommodated may be sealed to physically and chemically protect the electrode assembly against the outside.

The electrode assembly accommodated in the pouch 11 may include an electrode (not shown) and a separator (not shown). Specifically, the electrode assembly may include electrodes such as positive and negative electrodes and a separator interposed between the electrodes. Here, the positive electrode may be formed by applying a positive electrode active material to an electrode collector, and the negative electrode may be formed by applying a negative electrode active material to an electrode collector.

An electrode tab (not shown) coupled to an electrode lead 12 to be described later may protrude from each of the electrodes of the electrode assembly.

Specifically, the electrode tab is formed on the electrode collector through a notching process before the electrode active material is applied or may be attached to any portion of the electrode collector after the electrode active material is applied so that the electrode tab is connected to the electrode to protrude from the electrode.

The electrode tab may be variously coupled to the electrode lead 12 to be described later. For example, the electrode tab may be welded to the electrode lead 12, and the welding may be performed by ultrasonic welding, laser welding, resistance welding, or the like.

The electrode lead 12 may be a configuration that is electrically connected to the electrode assembly to protrude outward from the inside of the pouch 11, and various configurations are possible.

Specifically, the electrode lead 12 has one end connected to electrode tabs formed on the electrodes and the other end protruding to the outside of the pouch 11 so as to be connected to an electrode lead 12 or an external device (e.g., busbar) of the other secondary battery 10. Thus, the electrode lead 12 may electrically connect the electrode assembly accommodated in the pouch 11 to the other secondary battery or external devices outside the pouch 11.

Here, the electrode lead 12 may be connected to the electrode tabs through the welding as described above. In this case, an area of the electrode lead 12 which is welded to the electrode tabs may be defined as a welding area.

The electrode lead 12 may have various shapes.

Here, the electrode lead 12 may be provided so that at least one of corners disposed inside the pouch 11 has a predetermined curvature radius in order to prevent the inside of the pouch 11 from being damaged. Here, a center of a curvature circle having the curvature radius may be disposed on the electrode lead 12.

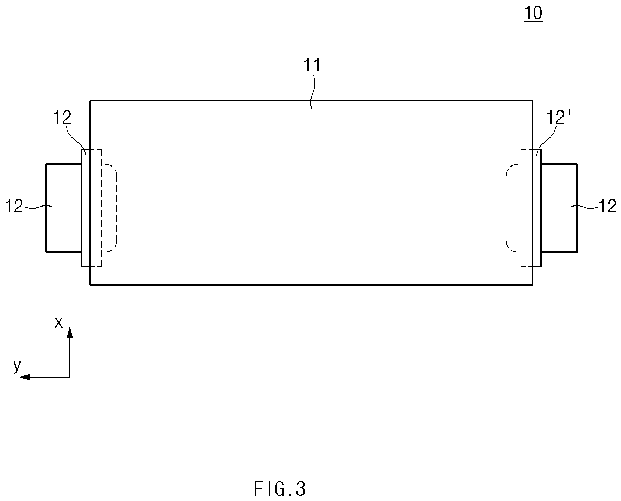

In more detail, as illustrated in FIG. 3, the electrode lead 12 may have a structure in which a corner of an end disposed inside the pouch 11 and connected to the above-described electrode tabs is processed to be curved with a predetermined curvature radius. Thus, stress concentrated to a sharp edge, angle, or burr in the corner may be minimized to prevent the pouch 11 from being damaged. Here, in FIG. 3, a portion disposed outside the pouch 11 of the electrode lead 12 and an electrode lead film 12' to be described later is indicated by a solid line, and a portion disposed inside the pouch 11 is indicated by a dotted line.

When the corner of the electrode lead 12 is processed to be curved, if the corner is excessively processed to be curved, or the corner is insufficiently processed to be curved, quality reliability of the secondary battery 10 may be affected.

That is, when the corner is excessively processed to be curved, since a surface area of the welding area between the electrode tab and the electrode lead 12 is not sufficiently secured, poor coupling between the electrode tab and the electrode lead 12 may occur. On the other hand, when the corner is insufficiently processed to be curved, the stress concentrated to the corner may still remain to cause damage of the pouch 11.

Thus, according to the present invention, to solve the stress concentration in the corner while sufficiently securing the welding area between the electrode tab and the electrode lead 12, widths Rx and Ry of the curved corner are specifically limited to a ratio of a curvature radius R, a width W of the electrode lead 12, and a length L of the electrode lead 12. This will be described in more detail below.

The width of the corner may include a width of the corner in a width direction of the electrode lead 12 and a width of the corner in a longitudinal direction of the electrode lead 12.

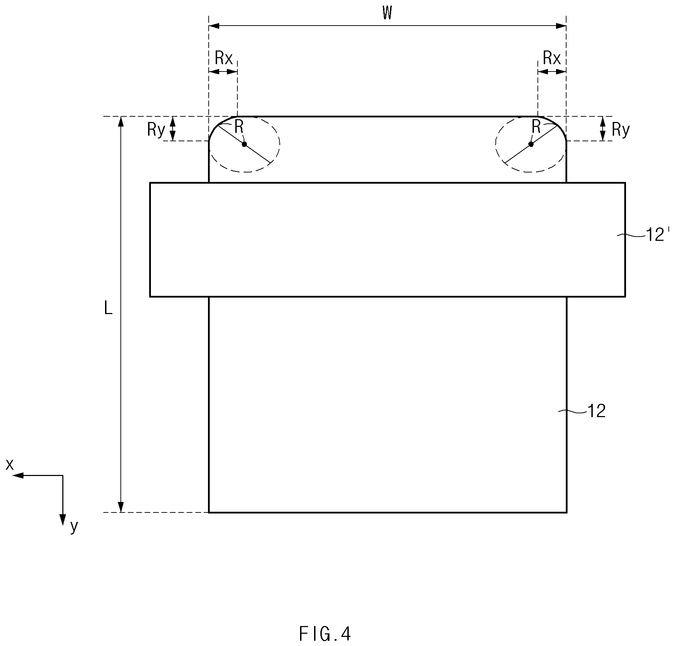

Here, the width of the corner in the width direction of the electrode lead 12 may be understood as a width of the corner corresponding to the width direction of the electrode lead 12 (x direction in FIG. 4) in a horizontal direction, and the width of the corner in the longitudinal direction of the electrode lead 12 may be understood as a width of the corner corresponding to the longitudinal direction (y direction in FIG. 4) of the electrode lead 12 in the horizontal direction.

First, a ratio between the width of the corner and the width of the electrode lead 12 in the width direction of the electrode lead 12 may be limited within a specific numerical range.

Specifically, a damage experiment may be performed to determine whether a certain numerical range is satisfied.

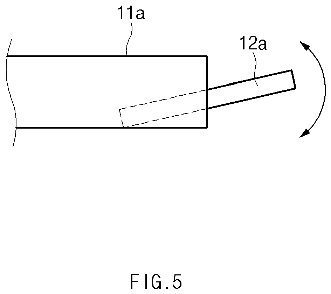

For example, referring to FIG. 5, an experiment of repeatedly bending the electrode lead 12a attached to the pouch 11a may be performed. Specifically, a plurality of electrode leads 12a having curvature radii R different from that of the pouch 11a may be prepared. The plurality of electrode leads 12a having different curvature radii R may be repeatedly bent at an angle of 90 degrees with respect to a bottom surface of the pouch 11a, and an area that is in contact with the pouch 11a may be repeatedly damaged by the bent electrode lead 12a.

Thereafter, the damaged pouch may be put into an aqueous solution containing a rate of 20% copper sulfate (CuSO₄), and a power source that applies a voltage of 6V may be electrically connected to the pouch and the aqueous solution. In other words, a positive (+) pole of the power supply may be electrically connected to the aqueous solution, and a negative (-) pole of the power supply may be electrically connected to the pouch.

An exposed portion of aluminum (Al) may be confirmed by precipitation of copper (Cu) after the damaged pouch and the copper sulfate solution are electrically connected to each other for 30 to 60 minutes. That is, it is confirmed how much the aluminum layer is exposed by damaging the pouch 11a for each electrode lead 12a having a different curvature radius R. In other words, when copper is precipitated, this may mean that the aluminum layer of the pouch 11a is exposed, and thus, a degree of damage to the pouch 11a may be confirmed.

According to the above experiment, when the width of the corner in the width direction of the electrode lead 12 is Rx, and the width of the electrode lead 12 is W, the Rx and W may be limited to satisfy a conditional expression of 1/50≤ Rx/W≤1/20.

When Rx/W is less than 1/50, an area in which stress is concentrated may still remain due to the insufficient curving of the corner of the electrode lead 12. That is, in the experimental procedure, when Rx/W is less than 1/50, it may be confirmed that copper is precipitated, and the aluminum layer is exposed. On the other hand, when Rx/W exceeds 1/20, since the surface area of the welding area is not sufficiently secured due to the excessive curving of the corner of the electrode lead 12, there is a problem in that welding strength between the electrode tab and the electrode lead 12 increases. Considering this, when the width W of the electrode lead 12 is 40 mm≤W≤50 mm, the width Rx of the corner in the width direction of the electrode lead 12 is limited to 1 mm≤Rx≤2 mm, more preferably, limited to 1.1 mm ≤Rx≤1.9 mm. In this case, the Rx may be set to 1.5 mm.

In addition, when the width of the corner in the width direction of the electrode lead 12 is Rx, and the curvature radius is R, the Rx and R may be limited to satisfy a conditional expression of Rx≤R. This is because, when Rx is greater than R (Rx>R), an area to be deleted on the electrode lead 12 for curving the corner is excessive, and thus, even the welding area for coupling the electrode tab to the electrode lead 12 is deleted, the welding area may be reduced to deteriorate the welding strength between the electrode tab and the electrode lead 12.

A ratio between the width of the corner and the length of the electrode lead 12 in the longitudinal direction of the electrode lead 12 may be limited within a specific numerical range.

Specifically, when the width of the corner in the longitudinal direction of the electrode lead 12 is Ry, and the length of the electrode lead 12 is L, Ry and L may be limited to satisfy a conditional expression of 1/45≤Ry/L≤ 1/20.

This means that when Ry/L is less than 1/45, an area in which stress is concentrated may still remain due to the insufficient curving of the corner of the electrode lead 12. Similarly, when Ry/L is less than 1/45, it may be confirmed that copper is precipitated, and the aluminum layer is exposed in the above experiment. On the other hand, when Ry/L exceeds 1/20, since the surface area of the welding are is not sufficiently secured due to the excessive curving of the corner of the electrode lead 12, there is a problem in that the welding strength between the electrode tab and the electrode lead 12 is weakened.

Considering this, when the length L of the electrode lead 12 is 40 mm≤L≤45 mm, the width Ry of the corner in the longitudinal direction of the electrode lead 12 is limited to 1 mm≤Ry≤2 mm, more preferably, limited to 1.1 mm≤Ry≤1.9 mm. In this case, the Ry may be preferably set to 1.5 mm.

In addition, when the width of the corner in the longitudinal direction of the electrode lead 12 is Ry, and the curvature radius is R, the Rx and R may satisfy a conditional expression of Ry≤R. This is because, when Ry is greater than R (Ry>R), an area to be deleted on the electrode lead 12 for curving the corner is excessive, and thus, even the welding area is deleted, the welding area may be reduced to deteriorate the welding strength.

The width of the corner in the width direction of the electrode lead 12 and the width of the corner in the longitudinal direction of the electrode lead 12 may be formed to have various ratios with respect to each other.

For example, when the width of the corner in the width direction of the electrode lead 12 is Rx, and the width of the corner in the longitudinal direction of the electrode lead 12 is Ry, Rx and Ry may be limited to satisfy a conditional expression of 1/2≤Rx/R≤2. This is because, when Rx/Ry is less than 1/2, or Rx/Ry exceeds 2, the curved portion of the corner of the electrode lead 12 may be formed asymmetrically to cause a problem that it is difficult to secure the welding area.

Considering this, when the width Rx of the corner in the width direction of the electrode lead 12 is 1 mm≤Rx≤2 mm, the Ry may be limited to 1 mm≤R≤2 mm. In this case, each of the Rx and Ry may be set to 1.5 mm.

The above-described curvature radius may be set to various values.

Here, the curvature radius may also be preferably set within a range capable of securing the welding strength by preventing an interference between the welding area of the electrode lead 12 and the curved portion even when the corner is curved.

Considering this, when the curvature radius is R, the width Rx of the corner in the width direction of the electrode lead 12 and the width Ry of the corner in the longitudinal direction of the electrode lead 12 are limited to 1 mm to 2 mm, respectively, the R may be set to satisfy a conditional expression of 2 mm ≤ R ≤ 5 mm. More preferably, the R may be set to 3 mm.

In other words, when R is less than 2 mm, it may be confirmed that the pouch is damaged because copper is precipitated, and the aluminum layer is exposed in the above experiment. On the other hand, when R is greater than 5 mm, since the welding area is not sufficiently secured due to the excessive curving of the corner of the electrode lead 12, there is a problem in that the welding strength between the electrode tab and the electrode lead 12 is weakened, resulting in poor coupling.

The corner of the electrode lead 12 may be curved in various manners. For example, the corner of the electrode lead 12 may be processed to be curved by performing chamfering using a laser or the like.

In addition, the above-described electrode lead 12 may protrude outward from at least one end of the pouch 11. As an example, the electrode lead 12 may protrude from one end of the pouch 11 in one direction. As another example, the electrode leads 12 may protrude from both ends of the pouch 11 in opposite directions, respectively.

In addition, an electrode lead film 12' made of an insulating material may be additionally attached to at least one surface of the electrode lead 12 so as to improve sealability of the pouch 11 and sufficiently secure an electrical insulation state.

In addition, the material of the electrode lead 12 may be used without particular limitation as long as the material is an electrically conductive material. For example, the material of the electrode lead 12 may include at least one of copper (Cu), aluminum (Al), nickel (Ni), iron (Fe), carbon (C), chromium (Cr), or manganese (Mn). However, the electrode lead 12 is not limited to the above-mentioned materials and may be variously selected in consideration of mechanical strength, flexibility, processability, and the like.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Secondary battery
11: Pouch
12: Electrode lead
12': Electrode lead film
Rx: Width of corner in width direction of electrode lead
Ry: Width of corner in longitudinal direction of electrode lead
W: Width of electrode lead
L: Length of electrode lead
R: Curvature radius

## Claims

1. A secondary battery comprising:
a pouch in which an electrode assembly is accommodated; and
an electrode lead electrically connected to the electrode assembly and protruding outward from the inside of the pouch,
wherein, in the electrode lead, at least one of corners disposed inside the pouch has a predetermined curvature radius.

2. The secondary battery of claim 1, wherein, when a width of the corner in a width direction of the electrode lead is Rx, and a width of the electrode lead is W, a conditional expression of 1/50≤Rx/W≤1/20 is satisfied.

3. The secondary battery of claim 1, wherein, when a width of the corner in a longitudinal direction of the electrode lead is Ry, and a length of the electrode lead is L, a conditional expression of 1/45≤Ry/L≤1/20 is satisfied.

4. The secondary battery of claim 1, wherein, when a width of the corner in a width direction of the electrode lead is Rx, and a curvature radius of the corner is R, a conditional expression of Rx≤R is satisfied.

5. The secondary battery of claim 1, wherein, when a width of the corner in a longitudinal direction of the electrode lead is Ry, and a curvature radius of the corner is R, a conditional expression of Ry≤R is satisfied.

6. The secondary battery of claim 1, wherein, when a width of the corner in a width direction of the electrode lead is Rx, and a width of the corner in a longitudinal direction of the electrode lead is Ry, a conditional expression of 1/2≤Rx/Ry≤2 is satisfied.

7. The secondary battery of claim 1, wherein, when the curvature radius is R, a conditional expression of 2 mm≤ R≤5 mm is satisfied.

8. The secondary battery of claim 1, wherein, when a width of the corner in a width direction of the electrode lead is Rx, a conditional expression of 1 mm≤Rx≤2 mm is satisfied.

9. The secondary battery of claim 1, wherein, when a width of the corner in a longitudinal direction of the electrode lead is Ry, a conditional expression of 1 mm≤Ry≤2 mm is satisfied.

10. The secondary battery of claim 1, wherein a center of a curvature circle having the curvature radius is disposed on the electrode lead.

11. The secondary battery of claim 1, further comprising a plurality of electrode tabs protruding from an electrode of the electrode assembly and coupled to the electrode lead through welding.
